# EUROPEAN PATENT SPECIFICATION

(11) **EP 1 239 190 B1**
(45) Date of publication and mention of the grant of the patent: **22.02.2012**
(21) Application number: 02004942.5
(22) Date of filing: 05.03.2002
(51) Int. Cl.: F16H 57/04, F16H 57/02

(54) **Transmission unit**
Getriebeeinheit
Ensemble de transmission

(30) Priority: 08.03.2001 JP 2001065683
(43) Date of publication of application: 11.09.2002
(73) Proprietor: JATCO Ltd, Fuji-shi, Shizuoka 417-8585 (JP)
(72) Inventor: Kato, Yoshiaki, c/o Jatco TransTechnology Ltd., Fuji-shi, Shizuoka 417-0023 (JP); Iizuka, Kouichi, c/o Jatco TransTechnology Ltd., Fuji-shi, Shizuoka 417-0023 (JP)
(74) Representative: Grünecker, Kinkeldey, Stockmair & Schwanhäusser

(56) References cited:
- EP-A- 1 193 414
- EP-A- 1 279 547
- US-A- 5 788 037

## Description

The present invention relates to transmission units for automatically changing engine output rotation and transmitting it to driving wheels, and more particularly, to transmission units for transferring engine drive force to a shift mechanism through a damper and a clutch.

One of such transmission units is disclosed in U.S. Patent No. 5,176,579 issued January 5, 1993 to Ohsono, et al.

However, due to its structure as will be described later, the above transmission unit presents some problems. Specifically, when changing applied engine, the transmission unit should be increased in overall size, leading to limited applicable vehicle types. Moreover, since a damper and a flywheel are supported on an input shaft, engine vibrations are directly transferred to an input shaft. Further, a supporting bearing of the grease-filled type is used, which presents, however, a difficulty of securing stable support because of application of large torque on that portion. US 5788 037 discloses a transmission unit falling under the wording of the preamble of claim 1.

It is, therefore, an objective of the present invention to provide transmission units with a sure supply of lubrication oil.

This objective is achieved by a transmission unit according to claim 1. Claim 2 concerns a particular embodiment of claim 1.

The other objects and features of the present invention will be apparent from the following description with reference to the accompanying drawings, wherein:

FIG. 1 is a sectional view showing an illustrative embodiment of a transmission unit at the perimeter of a start clutch according to the present invention;

FIG. 2 is a view similar to FIG. 1, showing a comparative example of a transmission unit at the perimeter of a start clutch; and

FIG. 3 is a view similar to FIG. 2, showing a transmission unit in the related art.

### DETAILED DESCRIPTION OF THE INVENTION

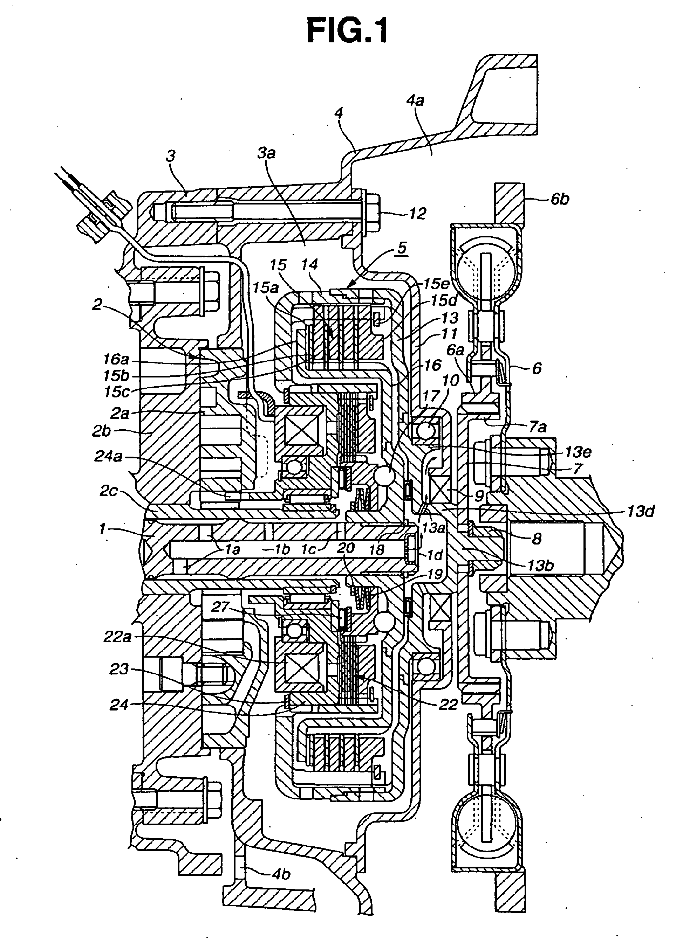

Referring to FIGS. 1-3 wherein like reference numerals designate like parts throughout the views, a transmission unit embodying the present invention will be described. In the illustrative embodiment, the automatic transmission includes a metal-belt continuously variable transmission (CVT). A description is omitted with regard to shift operation and the like.

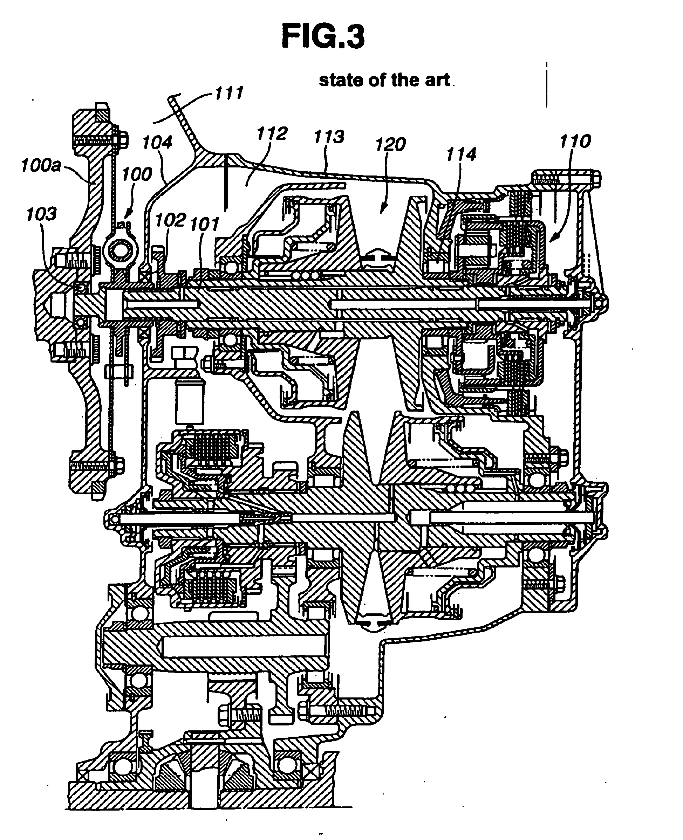

Referring to FIG. 3, before entering the illustrative embodiment, the transmission unit disclosed in U.S. Patent No. 5,176,579 will be described. This transmission unit comprises a damper 100 and flywheel 100a for absorbing a variation in engine rotation, an input shaft 101 for transmitting rotation or torque input from the damper 100 to a start clutch 110, and a shift mechanism 120 for changing input rotation through the start clutch 110.

The damper 100 and flywheel 100a are accommodated in a first compartment 111 which communicates with an atmosphere and is unlubricated, whereas the start clutch 110 and shift mechanism 120 are accommodated in a second compartment 112 which is lubricated. The first and second compartments 111, 112 are defined by a partition 104 having an input-shaft through portion sealed by an oil seal 102.

In the first compartment 111, a supporting bearing 103 for rotatably supporting the flywheel 100a is mounted to the input shaft 101, and the damper 100 is spline-engaged therewith. Disposed on the outer periphery of the input shaft 101 are a primary pulley of a belt CVT serving as shift mechanism 120, etc. The input shaft 101 is supported by a transmission casing 113 through the primary pulley supported through a bearing 114, etc.

However, as described before, the transmission unit disclosed in U.S. Patent No. 5,176,579 presents the following problems. When changing applied engine to a high-torque engine, for example, a junction between the damper 100 and the input shaft 101 should be modified to resist high torque. This can be achieved by enlarging the diameter of the input shaft 101, which accompanies, however, a change in the diameter of the oil seal 102 mounted to the partition 104, requiring a change in the diameter of the through hole of the partition 104 and the oil seal 102 itself in addition to the damper 100. This also can be achieved by axially extending the junction of the input shaft 101, which increases the overall size of a transmission unit, raising a problem of limited applicable vehicle types.

Moreover, since the damper 100 and the flywheel 100a are supported on the input shaft 101, engine vibrations are directly transferred to the input shaft 101.

Further, the supporting bearing 103 is arranged in the first compartment 111 which is unlubricated. Thus, the supporting bearing 103 of the grease-filled type is used, which presents, however, a difficulty of securing stable support because of application of large torque on that portion.

Referring to FIG. 1, in the illustrative embodiment, the transmission comprises a transmission casing 3 and an input-clutch housing 4 attached to a front-end opening of the transmission casing 3. A front cover 11 as a partition is attached to the clutch housing 4 with a bolt 12 to define thereby a first compartment 4a communicating with an atmosphere and accommodating a torsional damper 6. The transmission casing 3, part of the input clutch housing 4, and front cover 11 cooperate to define a second compartment 3a which is lubricated.

An oil pump 2 is interposed between the transmission casing 3 and the input clutch housing 4. This oil pump 2 includes a typical gear pump wherein internal-gear pump elements are accommodated in a space defined by a pump housing 2a and a pump cover 2b. A stationary hollow sleeve 2c is engaged with the inner periphery of the pump cover 2b, and an input shaft 1 is rotatably arranged therethrough.

An input clutch 5 is arranged above a front end of the input shaft 1 which protrudes into the input clutch housing 4. This input clutch 5 comprises an electromagnetic clutch 22, an input clutch pack 15 arranged on the outer periphery of the electromagnetic clutch 22, and a loading cam 17 arranged on the inner periphery of the electromagnetic clutch 22.

An input drum 13 of the input clutch pack 15 comprises a shank 13b for fixing an input hub 7 with a nut 8, a small-diameter shaft 13d or slide portion with respect to an oil seal 9, and a bearing support 13e for supporting the input drum 13 by means of the front cover 11 through a ball bearing 10.

Power of an engine, not shown, is transmitted to the input drums 13, 14 (on the drive side) of the input clutch pack 15 through the torsional damper 6 integrated with a drive plate 6b and the input hub 7. Power transmission parts include input hub 7 fixed to the input drum 13 which is rotatable together with an output member 6a of the torsional damper 6, input drum 14 spline engaged with the input drum 13, and a rotor 24 of the electromagnetic clutch 22 engaged with the input drum 14 for unitary rotation. An end 24a of the rotor 24 serves as a drive claw of the oil pump 2.

With the electromagnetic clutch 22 engaged, engine rotation is transmitted to the loading cam 17. Due to cam effect produced by balls rotating on a slope, the loading cam 17 generates a thrust force in the (input) clutch hub 16 (on the driven side) to move it rightward as viewed in FIG. 1. On the other hand, a thrust force or reaction force is generated to move through a thrust bearing 2 the input drum 14, rotor 24, and an electromagnet 22a leftward as viewed in FIG. 1 against a return plate spring 19 retained by a snap ring 20.

Referring to FIG. 1, the (input) clutch hub 16 is spline-engaged with the input shaft 1, and has a right end retained by a snap ring 18 for preventing axial movement. Thus, actually, the input drum 14 is moved leftward to engage a metal plate 15c with the input clutch pack 15 for unity rotation. The right end of the (input) clutch hub 16 serves to restrain its axial movement by a snap ring 15e through a stepped retainer 15d.

A facing plate 15b having friction-material facings placed on both sides is engaged with the (input) clutch hub 16 to be rotatable together. The metal plate 15c and facing plate 15b are disposed axially alternately, so that at engagement of the input clutch 5, a contact surface 16a of the (input) clutch hub 16 comes in contact with the friction-material facing surface of the facing plate 15b to cause wear and peeling of the facing surface. On this account, the contact surface 16a of the input clutch hub 16 is constructed to abut on the facing surface of the facing plate 15b through a floating plate 15a as shown in FIG. 1. Insertion of the floating plate 15a is not needed if the nearest facing plate 15b to the contact surface 16a of the (input) clutch hub 16 is constructed to have the facing placed on only the surface contacting the metal plate 15c, and not on the contact surface 16a.

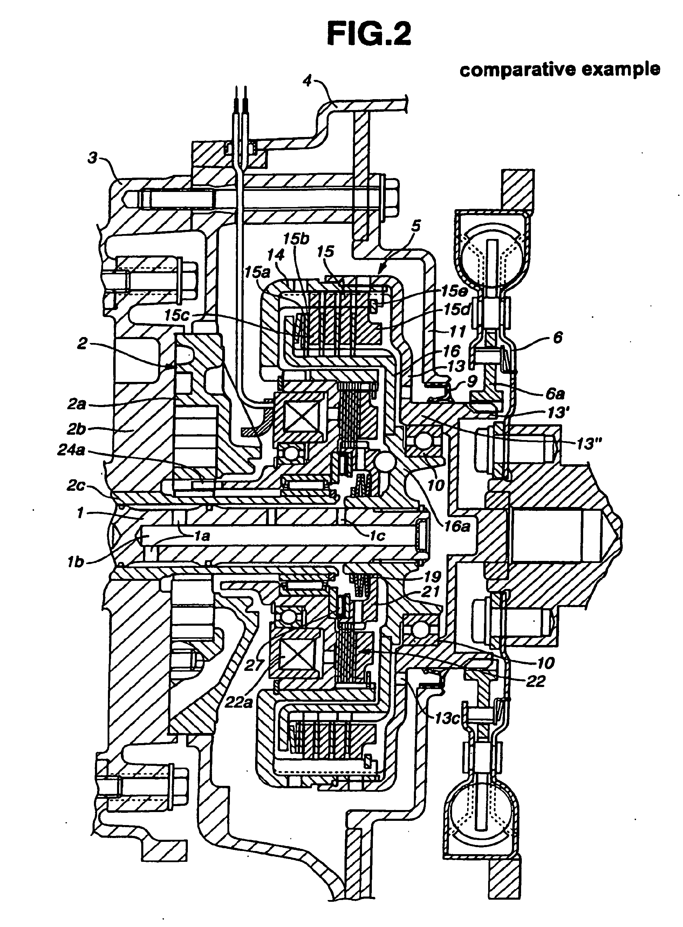

The following is a description with regard to setting of the input hub 7, oil seal 9, and bearing 10 in the related art as shown in FIG. 3, and that of the corresponding members in a comparative example and the illustrative embodiment as shown in FIG. 2.

In the related art, a damper 100 and an input shaft 101 are spline-engaged with each other in small shaft diameter. In order to correspond to a torque increase due to change in applied engine, the length of an axial spline is increased, or the diameter of the input shaft is increased. An increase in the length of the axial spline presents a problem of increasing the overall length of a unit due to increased length of the axial spline. On the other hand, an increase in the diameter of the input shaft needs a change in peripheral parts, such as an oil seal 102, of the transmission due to change in the diameter of the input shaft, leading to increased number of part types. This results not only in required change in applied engine in terms of torque and crankshaft mounting pitch and in the damper 100, but also a change in the input shaft 101 and peripheral parts.

Referring to FIG. 2, the comparative example shows one example of the transmission unit for transmitting an engine drive force to a shift mechanism through the damper and clutch. Problems encountered in the comparative example are as follows:

### 1) Problem due to change in applied engine

In the comparative example, in the same way as in the related art, the torsional damper 6 and input drum 13 are engaged with each other through respective splines 6a, 13'. Consequently, when changing applied engine in terms of torque and crankshaft mounting pitch, a change is needed not only in the torsional damper 6, but also in the oil seal 9 and front cover 11 due to enlargement of the spline diameter of the input drum 13. Spline engagement of the torsional damper 6 and input drum 13 is located on the crankshaft diameter for the purpose of a reduction in its axial length, leading to increased diameter of the oil seal 9. Moreover, the bearing 10 arranged between an input-drum slide support 13" of the input drum 13 and a bearing support 16a provided to the (input) clutch hub 16 is supported by rotary members, producing a larger amount of eccentricity which forms the disadvantage to the function and quality of the oil seal 9.

### 2) Problem of vibrations in the drum supporting structure

Since the input drum 13 is supported by the bearing 10 and oil seal 9, engine vibrations are transferred from the crankshaft to the input-drum slide support 13" through the torsional damper 6, which are then input to the bearing support 16a through the bearing 10. Moreover, engine vibrations are transferred directly to the input shaft 1.

### 3) Problem of lubrication for the bearing and oil seal in the lubrication structure

With lubrication of the oil seal 9, lubrication is carried out through an oil hole formed in the input drum 13 and having the same diameter as that of the oil seal 9. However, the difficulty of securing a sufficient oil amount affects the quality of the oil seal 9.

The comparative example presents the problems 1) to 3) as described above. On the other hand, in the illustrative embodiment, the input hub 7 for transmitting power from the torsional damper 6 to the input drum 13 is integrally and detachably fixed to the small-diameter shaft 13d of the input drum 13, and includes a spline 7a for coupling with the torsional damper 6.

The spline 7a of the input hub 7 and the spline 6a of the torsional damper 6 are arranged axially slidably and rotatably. When torque is increased due to change in applied engine, the input hub 7 is enlarged in the spline diameter with less increase in the spline length without changing integration of the input drum 13 with the input hub 7, thus keeping the spline strength. This allows provisions against torque increase with less increase in the axial dimension and only by a change in the input hub 7, resulting in restraint of an increase in transmission parts to be changed, such as input drum 13, oil seal 9, front cover 11 and bearing 10. Therefore, changing only the input hub 7 can deal with a change in applied engine in terms of torque and crankshaft mounting pitch and also in the torsional damper 6, which corresponds to means for solving the problem 1).

As being supported on the front cover 11 as a non-rotary member, the bearing 10 can restrain an amount of axial eccentricity on the oil seal 9, resulting in enhancement of the function and quality of the oil seal 9 and bearing 10. In the comparative example, since the input drum 13 is supported between the bearing 10 and the oil seal 9, a problem occurs that engine vibrations are directly transferred to the input shaft 1. On the other hand, in the illustrative embodiment, the input drum 13 is supported to the front cover 11 as a stationary member through the bearing 10, resulting in avoiding of transfer of vibrations from the input clutch hub 16 to the input shaft 1, which corresponds to means for solving the problem 2].

As to the oil seal 9 and bearing 10 mounted to the front cover 11, an increase in the axial dimension can be restrained by providing the oil seal 9 to the small-diameter shaft 13d of the input drum 13 and arranging the bearing 10 on the input-drum bearing support 13e located on the shaft diameter with respect to the oil seal 9. Lubricating oil can surely be supplied to the oil seal 9 and the bearing 10 through an opening 1a, hollow 1b and opening 1d of the input shaft 1 and an opening 13a of the input drum 13, which corresponds to means for solving the problem 3).

The following is a description with regard to lubrication of an electromagnetic multiple disk clutch.

Lubricating oil derived from a unillustrated control valve circuit which includes a conventional lockup clutch supply circuit is supplied to the electromagnetic clutch 22 and the input clutch pack 15 due to centrifugal pump effect through the opening 1a, hollow 1b, and opening 1c of the input shaft 1. A plurality of openings, not shown, is formed in the input drums 13, 14, through which lubrication oil is accumulated in a space sealed by the front cover 11 and the clutch housing 4. Then, it is returned to an oil pan mounted to the transmission casing 3 through a drain port 4b which opens to a lower end of the clutch housing 4.

As described above, in the illustrative embodiment, the transmission unit comprises first compartment 4a for accommodating the torsional damper 6 and communicating with an atmosphere, second compartment 3a for accommodating the input clutch 5 with input drums 13, 14 and the belt CVT or shift mechanism and being lubricated, front cover 11 for defining the first compartment 4a and the second compartment 3a, and oil seal 9 for sealing a through portion of the front cover through which the small-diameter shaft 13d of the input drum 13 is arranged. Since the detachable input hub 7 is arranged in the first compartment 4a for connecting the torsional damper 6 and the input drum 13, parts to be changed due to change in applied engine are only input hub 7, widening the engine applicability, resulting in a reduction in the number of man-hours for assembling and in the manufacturing cost.

Moreover, the bearing 10 for rotatably supporting the input drum 13 is provided to the front cover 11. Specifically, the input drum 13 is supported by the front cover 11 as a stationary member, and not on the transmission input shaft as in the related art, enabling design of the transmission input shaft with shorter length. By way of example, if the input drum 13 is supported on the transmission input shaft, engine vibrations are directly transferred to the transmission input shaft through the input drum 13. The present invention proposes supporting of the input drum 13 by the front cover 11 as a stationary member, provides a solution to the problem of direct transfer of engine vibrations to the transmission input shaft.

The oil seal 9 is arranged between the input drum 13 and the front cover 11 and closer to the first compartment 4a than the bearing 10. Specifically, in the related art, the supporting bearing 103 is arranged in the first compartment which is unlubricated. This requires the use of a supporting bearing of the grease-filled type, presenting a difficulty of securing stable support because of application of large torque on that portion. On the other hand, the present invention proposes arranging of the oil seal 9 closer to the first compartment 4a than the bearing 10, which means arranging of the supporting bearing in the second compartment 3a. Such arrangement of the bearing 10 in the second compartment 3a which is lubricated allows sure lubrication of the bearing 10, leading to achievement of stable support of rotation.

The lubricating opening 13a is formed in the vicinity of the smatt-diameter shaft 13d of the input drum 13 to extend from the axis to the oil seal 9. Specifically, there are arranged oil seal 9 in the vicinity of the small-diameter shaft 13d and further bearing 10, enabling efficient and stable lubrication to the oil seal 9 and the bearing 10 with minimum lubrication.

The lubricating opening 1d is formed in the input shaft 1 at an end on the side of the input drum 13. This allows sure supply of lubricating oil to the opening 1d formed in the vicinity of this end of the input shaft 1, resulting in avoiding of problems such as seizing due to lack of lubrication oil.

## Claims

1. A transmission unit, comprising:
an input shaft (1);
a damper (6) connected to an engine output shaft, the damper (6) absorbing a variation in engine output;
a clutch (5) which engages and disengages the damper (6) with and from the input shaft (1);
a first compartment (4a) which accommodates the damper (6), the first compartment (4a) communicating with an atmosphere
a second compartment (3a) which accommodates the clutch (5), the second compartment (3a) being lubricated; and second compartments (4a, 3a),
a partition (11) which defines the first and second compartments (4a, 3a),
a sealing material (9) which seals a through portion of the partition (11) through which an input end (13d) of the clutch (5) is arranged,
an input hub (7) which is detachably arranged in the first compartment (4a), the input hub (7) is coupling the damper (6) with the input end (13d) of the clutch (5), wherein
the clutch (5) comprises an input drum (13) for receiving torque out of the damper (6) and a clutch hub (16) for providing the torque of the input drum (13) to the input shaft (1), a bearing (10) is mounted to the partition (11), the bearing (10) rotatably supporting the input drum (13), the sealing material (9) is interposed between a small-diameter shaft (13d) of the input drum (13) and the partition (11), the sealing material (9) being arranged on the side of the first compartment (4a) with respect to the bearing (10) **characterized in that** said input drum (13) has an opening (13a) for lubrication formed in the vicinity of the small-diameter shaft (13d) to extend from an axis of the input drum (13) to the sealing material (9).

2. A transmission unit as specified in any of claims 1, **characterized in that** the input shaft (1) has an opening (1c) for lubrication formed at an end on the side of the input drum (13).

## Patentansprüche

1. Getriebeeinheit, aufweisend:
eine Eingangswelle (1);
einen Dämpfer (6), verbunden mit einer Motorausgangswelle, wobei der Dämpfer (6) eine Veränderung in der Motorausgangsleistung absorbiert;
eine Kupplung (5), die den Dämpfer (6) mit oder von der Ausgangswelle (1) in Eingriff oder außer Eingriff bringt;
einen ersten Raum (4a), der den Dämpfer (6) aufnimmt, wobei der erste Raum (4a) mit einer Atmosphäre in Verbindung ist;
einen zweiten Raum (3a), der die Kupplung (5) unterbringt, wobei der zweite Raum (3a) geschmiert wird;
eine Trennwand (11), die den ersten und den zweiten Raum (4a, 3a) begrenzt,
ein Abdichtmaterial (9), das einen Durchgangsabschnitt der Trennwand (11) abdichtet, durch das ein Eingangsende (13d) der Kupplung (5) angeordnet ist, eine Eingangsnabe (7), die in dem ersten Raum (4a) lösbar angeordnet ist, wobei die Eingangsnabe (7) den Dämpfer (6) mit dem Eingangsende (13d) der Kupplung (5) kuppelt, wobei die Kupplung (5) eine Eingangstrommel (13) aufweist, zum Aufnehmen eines Drehmomentes aus dem Dämpfer (6) und eine Kupplungsnabe (16) zum Übertragen des Drehmomentes der Eingangstrommel (13) auf die Eingangswelle (1), ein Lager (10) an der Trennwand (11) montiert ist, das Lager (10) drehbar die Eingangstrommel (13) lagert, das Abdichtmaterial (9) zwischen eine Welle (13d) mit kleinem Durchmesser der Eingangstrommel (13) und der Trennwand (11) eingesetzt ist, das Abdichtmaterial (9) auf der Seite des ersten Raums (4a) in Bezug auf das Lager (10) angeordnet ist, **dadurch gekennzeichnet, dass** die Eingangstrommel (13) eine Öffnung (13a) für die Schmierung hat, gebildet in der Nähe der Welle (13d) mit kleinem Durchmesser, um sich von einer Achse der Eingangstrommel (13) zu dem Abdichtmaterial (9) zu erstrecken.

2. Getriebeeinheit nach Anspruch 1, **dadurch gekennzeichnet, dass** die Eingangswelle (1) eine Öffnung (1 c) für die Schmierung hat, gebildet an einem Ende der Seite der Eingangstrommel (13).

## Revendications

1. Unité de transmission comprenant :
un arbre d'entrée (1) ;
un amortisseur (6) relié à un arbre de sortie de moteur, l'amortisseur (6) absorbant une variation de puissance du moteur ;
un embrayage (5) qui accouple et désaccouple l'amortisseur (6) et l'arbre d'entrée (1) ;
un premier compartiment (4a) qui reçoit l'amortisseur (6), le premier compartiment (4a) communiquant avec une atmosphère ;
un second compartiment (3a) qui reçoit l'embrayage (5), le second compartiment (3a) étant lubrifié ;
une cloison (11) qui définit les premier et second compartiments (4a, 3a),
un matériau d'étanchéité (9) qui rend étanche une partie de la cloison (11) à travers laquelle une extrémité d'entrée (13d) de l'embrayage (5) est disposée,
un moyeu d'entrée (7) qui est disposé de manière amovible dans le premier compartiment (4a), le moyeu d'entrée (7) accouple l'amortisseur (6) et l'extrémité d'entrée (13d) de l'embrayage (5), étant précisé que l'embrayage (5) comprend un tambour d'entrée (13) pour recevoir le couple sortant de l'amortisseur (6), et un moyeu d'embrayage (16) pour fournir le couple du tambour d'entrée (13) à l'arbre d'entrée (1), un palier (10) est monté sur la cloison (11), le palier (10) supportant en rotation le tambour d'entrée (13), le matériau d'étanchéité (9) est intercalé entre un arbre de petit diamètre (13d) du tambour d'entrée (13) et la cloison (11), le matériau d'étanchéité (9) étant disposé sur le côté du premier compartiment (4a) par rapport au palier (10),
**caractérisée en ce que** le tambour d'entrée (13) a une ouverture (13a) pour la lubrification, qui est formée près de l'arbre à petit diamètre (13d) pour s'étendre à partir d'un axe du tambour d'entrée (13) jusqu'au matériau d'étanchéité (9).

2. Unité de transmission telle que spécifiée dans la revendication 1, **caractérisée en ce que** l'arbre d'entrée (1) a une ouverture (1c) pour la lubrification, qui est formée à une extrémité du côté du tambour d'entrée (13).
